# EUROPEAN PATENT SPECIFICATION

(11) **EP 3 214 829 B1**
(45) Date of publication and mention of the grant of the patent: **06.01.2021**
(21) Application number: 15861893.4
(22) Date of filing: 11.11.2015
(51) Int. Cl.: H04M 1/27453, H04M 1/27475, G06Q 10/10, H04M 19/04, H04L 29/12

(54) **METHODS FOR PRESENTING CONTACT INFORMATION AND DETERMINING CONTACT INFORMATION AND RELATED DEVICES**
VERFAHREN ZUR DARSTELLUNG VON KONTAKTINFORMATIONEN UND ZUR BESTIMMUNG VON KONTAKTINFORMATIONEN UND ZUGEHÖRIGE VORRICHTUNGEN
PROCÉDÉS DE PRÉSENTATION D'INFORMATIONS DE CONTACT ET DE DÉTERMINATION D'INFORMATIONS DE CONTACT ET DISPOSITIFS ASSOCIÉS

(30) Priority: 20.11.2014 CN 201410669803
(43) Date of publication of application: 06.09.2017
(73) Proprietor: Huawei Technologies Co. Ltd., Shenzhen, Guangdong 518129 (CN)
(72) Inventor: HUANG, Xueyan, Shenzhen Guangdong 518129 (CN); TANG, Weidong, Shenzhen Guangdong 518129 (CN)
(74) Representative: Körber, Martin Hans
(86) International application number: PCT/CN2015/094273
(87) International publication number: WO 2016/078521

(56) References cited:
- EP-A1- 2 706 441
- WO-A1-2011/161674
- WO-A1-2014/058153
- CN-A- 101 924 832
- CN-A- 101 945 331
- CN-A- 102 131 144
- US-A1- 2006 009 243
- US-A1- 2012 196 581
- US-A1- 2012 204 113
- US-A1- 2014 245 180

## Description

### TECHNICAL FIELD

Embodiments of the present disclosure relate to the field of information technologies, and more specifically, to a contact information presentation method, a contact information determining method, and a related device.

### BACKGROUND

In the prior art, a address book stores only names of contacts, prestored contact ways of the contacts, and the like. When a user browses the address book, the user can know only prestored content such as the names and the contact ways of the contacts. WO 2014/058153 A1 discloses an address book information service system.

### SUMMARY

Embodiments of the present disclosure provide a contact information presentation method according to independent claim 1, a contact information determining method according to independent claim 2, and a related device according to independent claim 3 or 4, which can provide rich contact information.

According to a first aspect, an embodiment of the present disclosure provides a contact information presentation method, where the method includes: obtaining an icon of a contact, where the icon of the contact includes an identifier of the contact and a feature icon of the contact, the feature icon of the contact is determined according to feature information of the contact, the feature information of the contact includes at least one of social text information of the contact or measurement data of the contact, and the identifier of the contact includes at least one of a profile picture of the contact or a name of the contact; and wherein for obtaining the icon of the contact, the method further comprises: obtaining a keyword of the social text information of the contact, wherein the social text information of the contact comprises at least one of the following: information posted on a social network by the contact or information sent to an user equipment by the contact; determining a feature corresponding to the keyword; determining a feature corresponding to the measurement data of the contact; determining, according to a preset priority, the feature information of the contact from the feature corresponding to the keyword of the contact or the feature corresponding to the measurement data of the contact, wherein a type of the feature of the contact belongs to at least one of the following types: a geographical environment in which the contact is located, a behavior state of the contact, or personal information of the contact; and presenting the icon of the contact on a contact screen.

According to a second aspect, an embodiment of the present disclosure provides a contact information determining method, where the method includes: obtaining feature information of a contact, where the feature information of the contact includes at least one of social text information of the contact or measurement data of the contact; and determining a keyword of the social text information of the contact, wherein the social text information of the contact comprises at least one of the following: information posted on a social network by the contact or information sent to an user equipment by the contact; determining a feature corresponding to the keyword; determining a feature corresponding to the measurement data of the contact; and determining, according to a preset priority, the feature information of the contact from the feature corresponding to the keyword of the contact or the feature corresponding to the measurement data of the contact, wherein a type of the feature of the contact belongs to at least one of the following types: a geographical environment in which the contact is located, a behavior state of the contact, or personal information of the contact; determining a feature icon of the contact according to the feature information of the contact, so that user equipment presents, on a contact screen, a feature icon corresponding to the feature of the contact.

According to a third aspect, an embodiment of the present disclosure provides user equipment, where the user equipment includes: an obtaining unit, configured to, obtain an icon of a contact, where the icon of the contact includes an identifier of the contact and a feature icon of the contact, the feature icon of the contact is determined according to feature information of the contact, the feature information of the contact includes at least one of social text information of the contact or measurement data of the contact, and the identifier of the contact includes at least one of a profile picture of the contact or a name of the contact; determine a keyword of the social text information of the contact, wherein the social text information of the contact comprises at least one of the following: information posted on a social network by the contact or information sent to the user equipment by the contact; determine a feature corresponding to the keyword; determine a feature corresponding to the measurement data of the contact; and determine, according to a preset priority, the feature information of the contact from the feature corresponding to the keyword of the contact or the feature corresponding to the measurement data of the contact, wherein a type of the feature of the contact belongs to at least one of the following types: a geographical environment in which the contact is located, a behavior state of the contact, or personal information of the contact; and a presentation unit, configured to: present a contact screen, and present, on the contact screen, the icon of the contact.

According to a fourth aspect, an embodiment of the present disclosure provides a device, where the device includes: an obtaining unit, configured to obtain feature information of a contact, where the feature information of the contact includes at least one of social text information of the contact or measurement data of the contact; and a determining unit, configured to, determining a keyword of the social text information of the contact, wherein the social text information of the contact comprises at least one of the following: information posted on a social network by the contact or information sent to an user equipment by the contact; determining a feature corresponding to the keyword; determining a feature corresponding to the measurement data of the contact; and determining, according to a preset priority, the feature information of the contact from the feature corresponding to the keyword of the contact or the feature corresponding to the measurement data of the contact, wherein a type of the feature of the contact belongs to at least one of the following types: a geographical environment in which the contact is located, a behavior state of the contact, or personal information of the contact; determine a feature icon of the contact according to the feature information of the contact, so that user equipment presents, on a contact screen, a feature icon corresponding to the feature of the contact.

According to the foregoing technical solutions, when user equipment presents a contact screen, an icon of a contact presented on the contact screen can reflect a feature of the contact. In other words, content besides basic communication information of the contact can be presented on the contact screen. In this way, richer content may be presented on the contact screen, and a user may know, by using the icon of the contact, of the feature corresponding to the contact.

### BRIEF DESCRIPTION OF DRAWINGS

To describe the technical solutions in the embodiments of the present disclosure more clearly, the following briefly describes the accompanying drawings required for describing the embodiments of the present disclosure. Apparently, the accompanying drawings in the following description show only some embodiments of the present disclosure, and a person of ordinary skill in the art may still derive other drawings from these accompanying drawings without creative efforts.
FIG. 1 shows a contact information presentation method according to an embodiment of the present disclosure;
FIG. 2 is a schematic flowchart of a contact information determining method according to an embodiment of the present disclosure;
FIG. 3 is a schematic diagram of a system applying an embodiment of the present disclosure;
FIG. 4 is a schematic diagram of presenting a contact icon on a contact screen by user equipment according to an embodiment of the present disclosure;
FIG. 5 is another schematic diagram of presenting a contact icon on a contact screen by user equipment according to an embodiment of the present disclosure;
FIG. 6 is another schematic diagram of representing, by using a contact profile picture, a frequency of contacting with a contact;
FIG. 7 is a structural block diagram of user equipment according to an embodiment of the present disclosure;
FIG. 8 is a structural block diagram of a device according to an embodiment of the present disclosure;
FIG. 9 is a structural block diagram of user equipment according to an embodiment of the present disclosure; and
FIG. 10 is a structural block diagram of a device according to an embodiment of the present disclosure.

### DESCRIPTION OF EMBODIMENTS

The following clearly describes the technical solutions in the embodiments of the present disclosure with reference to the accompanying drawings in the embodiments of the present disclosure. Apparently, the described embodiments are only some but not all of the embodiments of the present disclosure. All other embodiments obtained by a person of ordinary skill in the art based on the embodiments of the present disclosure without creative efforts shall fall within the protection scope of the present disclosure.

A terminal, which may also be referred to as a terminal device or user equipment (UE for short), may be a mobile terminal device (such as a mobile phone or a tablet computer), or may be a non-mobile terminal device (for example, a desktop computer). The user equipment mentioned in the embodiments of the present disclosure includes at least one display screen that can present contact information.

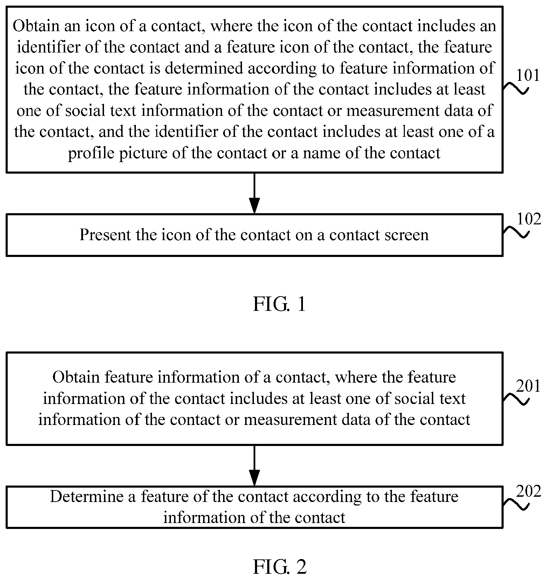

FIG. 1 shows a contact information presentation method according to an embodiment of the present disclosure. The method shown in FIG. 1 is executed by user equipment.

101: Obtain an icon of a contact, where the icon of the contact includes an identifier of the contact and a feature icon of the contact, the feature icon of the contact is determined according to feature information of the contact, the feature information of the contact includes at least one of social text information of the contact or measurement data of the contact, and the identifier of the contact includes at least one of a profile picture of the contact or a name of the contact.

102: Present the icon of the contact on a contact screen.

According to the method shown in FIG. 1, when the user equipment presents the contact screen, the icon of the contact presented on the contact screen can reflect a feature of the contact. In other words, content besides basic communication information of the contact can be presented on the contact screen. In this way, richer content may be presented on the contact screen, and a user may know, by using the icon of the contact, of the feature corresponding to the contact.

Optionally, in an embodiment, the method further includes: obtaining a keyword of the social text information of the contact, where the social text information of the contact includes at least one of the following: information posted on a social network by the contact or information sent to the user equipment by the contact; and determining the feature information of the contact according to a feature corresponding to the keyword, where a type of the feature of the contact belongs to at least one of the following types: a geographical environment in which the contact is located, a behavior state of the contact, or personal information of the contact.

Optionally, in another embodiment, the method further includes: determining, as a feature of the contact, a feature corresponding to the measurement data of the contact, and determining the feature information of the contact according to the feature, where a type of the feature of the contact belongs to at least one of the following types: a geographical environment in which the contact is located, a behavior state of the contact, or personal information of the contact.

Optionally, in another embodiment, the method further includes: obtaining a keyword of the social text information of the contact, where the social text information of the contact includes at least one of the following: information posted on a social network by the contact or information posted to the user equipment by the contact; determining a feature corresponding to the keyword; determining a feature corresponding to the measurement data of the contact; and determining the feature information of the contact according to the feature corresponding to the keyword and the feature corresponding to the measurement data of the contact, where a type of the feature of the contact belongs to at least one of the following types: a geographical environment in which the contact is located, a behavior state of the contact, or personal information of the contact.

Optionally, in an embodiment, the determining the feature of the contact according to the feature corresponding to the keyword and the feature corresponding to the measurement data of the contact includes: determining, according to a preset priority, the feature of the contact from the feature corresponding to the keyword of the contact or the feature corresponding to the measurement data of the contact.

Further, the identifier of the contact includes the profile picture of the contact, and the profile picture of the contact is determined according to data about interaction between the user equipment and the contact.

FIG. 2 is a schematic flowchart of a contact determining method according to an embodiment of the present disclosure.

201: Obtain feature information of a contact, where the feature information of the contact includes at least one of social text information of the contact or measurement data of the contact.

202: Determine a feature of the contact according to the feature information of the contact, so that user equipment presents, on a contact screen, a feature icon corresponding to the feature of the contact.

According to the method shown in FIG. 2, the feature of the contact can be determined according to the feature information of the contact. After obtaining the feature of the contact, the user equipment can present, on the contact screen, the feature icon corresponding to the contact. In this way, richer content may be presented on the contact screen, and a user may know, by using the icon of the contact, of the feature corresponding to the contact.

Optionally, in an embodiment, the method further includes: analyzing the social text information of the contact, and determining a keyword of the social text information of the contact, where the social text information of the contact includes at least one of the following: information posted on a social network by the contact or information sent to the user equipment by the contact; and determining the feature of the contact according to the keyword, where a type of the feature of the contact belongs to at least one of the following types: a geographical environment in which the contact is located, a behavior state of the contact, or personal information of the contact.

Optionally, in another embodiment, the method further includes: determining, as the feature of the contact, a feature corresponding to the measurement data of the contact, where a type of the feature of the contact belongs to at least one of the following types: a geographical environment in which the contact is located, a behavior state of the contact, or personal information of the contact.

Optionally, in another embodiment, the method further includes: analyzing the social text information of the contact, and determining a keyword of the social text information of the contact, where the social text information of the contact includes at least one of the following: information posted on a social network by the contact or information sent to the user equipment by the contact; determining, according to a feature corresponding to the keyword, a feature corresponding to the measurement data; and determining the feature of the contact according to the feature corresponding to the keyword and the feature corresponding to the measurement data of the contact, where a type of the feature of the contact belongs to at least one of the following types: a geographical environment in which the contact is located, a behavior state of the contact, or personal information of the contact.

Optionally, in an embodiment, the determining the feature of the contact according to the feature corresponding to the keyword and the feature corresponding to the measurement data of the contact includes: determining, according to a preset priority, the feature of the contact from the feature corresponding to the keyword of the contact or the feature corresponding to the measurement data of the contact.

Further, the method further includes: obtaining data about interaction between the user equipment and the contact; and determining a profile picture of the contact according to the data about interaction between the user equipment and the contact.

The method shown in FIG. 2 may be executed by a network device (for example, a server), or may be executed by the user equipment. When the method shown in FIG. 2 is executed by a network device, optionally, in an embodiment, the network device may send the determined feature of the contact to the user equipment. The user equipment may determine the corresponding feature icon according to the feature of the contact, and present, on the contact screen, the icon of the contact, where the icon of the contact includes an identifier of the contact and the feature icon of the contact. When the method shown in FIG. 2 is executed by a network device, optionally, in another embodiment, the network device may further determine the feature icon of the contact according to the feature of the contact, and send the feature icon of the contact to the user equipment. When the method shown in FIG. 2 is executed by the user equipment, after determining the feature of the contact, the user equipment may further determine the feature icon corresponding to the feature of the contact, and present, on the contact screen, the icon of the contact.

In order to help a person skilled in the art better understand the present disclosure, the following describes specific embodiments of the present disclosure. It should be noted that the following specific embodiments are only for helping the person skilled in the art better understand the present disclosure, instead of limiting the present disclosure.

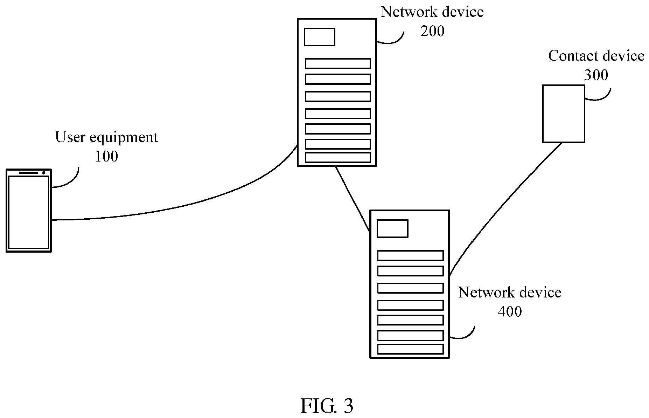

FIG. 3 is a schematic diagram of a system applying an embodiment of the present disclosure. User equipment 100 shown in FIG. 3 is the user equipment in the embodiment shown in FIG. 1. A contact stored in the user equipment 100 may send information by using one or more devices. In addition, the one or more devices can monitor data about the contact. The devices used by the contact may be collectively referred to as a contact device 300. The contact device 300 may include user equipment such as a mobile phone or a tablet computer. It can be understood that the user equipment may include some sensors such as a global positioning system (Global Positioning System, GPS) sensor and an acceleration sensor. The contact device 300 may further include a wearable device with a sensor, for example, a device such as a smart watch, smart glasses (for example, Google Glass), or a smart band including a sensor such as a heart rate sensor or a GPS sensor. It can be understood that some wearable devices (such as a smart watch and smart glasses) can also send social text information. A network device 200 and a network device 400 that are shown in FIG. 3 may be network devices such as servers.

The contact may send social text information by using the contact device 300. For example, by using the contact device 300, the contact may update a microblog, and send information such as an SMS message, a WeChat message, or an e-mail to the user equipment 100. The contact may post some information on a social network by using the contact device 300. The information posted on the social network by the contact may include a resume of the contact, such as job information, education experience, and interests and hobbies of the contact. The information such as the microblog, the SMS message, the WeChat message, and the e-mail that are sent by the contact by using the contact device 300, and the information posted on the social network by the contact may be collectively referred to as the social text information. The information may be stored in a corresponding server, or may be directly sent to the user equipment 100. For example, the network device 400 shown in FIG. 3 may be a server corresponding to the microblog. The microblog sent by the contact by using the contact device 300 may be stored in the network device 400.

The contact device 300 may further measure some information about the contact. The information about the contact (for example, data such as a geographical location, a heart rate, a pulse, and blood pressure of the contact) obtained through measurement by the contact device 300 may be referred to as measurement data of the contact. For example, when the contact device 300 includes a GPS sensor, the contact device 300 may determine a location of the contact by using the GPS sensor. For another example, when the contact device 300 includes a heart rate sensor, a heart rate of the contact can be determined. The contact device 300 may also send, to a corresponding server, the measurement data obtained through measurement.

It can be understood that the contact device 300 is a general term for devices used by the contact. For example, the contact device 300 may include a mobile phone, a tablet computer, a smart band, or the like. The contact may send a microblog by using the mobile phone. The contact may also send a microblog by using the tablet computer. The mobile phone held by the contact may measure some information about the contact. The smart band used by the contact may also measure some information about the contact.

The user equipment 100 may directly obtain the social text information and/or the measurement data. Specifically, the user equipment 100 may obtain, from the server corresponding to the social text information, the social text information posted by the contact. For example, the user equipment 100 may obtain, from the network device 400, the microblog posted by the contact by using the contact device 300. Alternatively, the user equipment 100 may obtain the social text information posted by using the contact device 300. For example, the user equipment 100 may obtain the social text information such as the SMS message, the WeChat message, or the e-mail that is sent by the contact by using the contact device 300. Similarly, the user equipment 100 may also obtain the measurement data of the contact from a server, or may obtain the measurement data of the contact from the contact device 300.

When the user equipment 100 obtains the social text information of the contact, the user equipment 100 may analyze the social text information of the contact and determine a keyword of the social text information of the contact. Then, the user equipment 100 may determine, as a feature of the contact, a feature corresponding to the keyword. A type of the feature of the contact may be at least one of the following types: a geographical environment in which the contact is located, a behavior state of the contact, or personal information of the contact. Information such as a work unit of the contact, interests and hobbies of the contact, and a school where the contact studies or studied all belong to the personal information of the contact.

For example, the user equipment 100 may determine that the social text information posted by the contact includes keywords such as "takeoff", "an airplane", and "a flight". In this case, the user equipment 100 may determine that a behavior state of the contact is "taking an airplane". In other words, the user equipment 100 determines that a feature of the contact is "taking an airplane". The user equipment 100 may further determine that the job information in the resume of the contact includes "from 2013-09-01, working in Huawei Company". In this case, the user equipment 100 may determine that the work unit of the contact is "Huawei Company". In other words, the user equipment 100 determines that a feature of the contact is "Huawei Company". The user equipment 100 may further determine a feature of the contact by counting a frequency of posting messages about an aspect by the contact. For example, if a frequency of posting football-related messages by the contact exceeds a preset threshold, the user equipment 100 may determine that an interest or a hobby of the contact is "football". In other words, the user equipment 100 determines that a feature of the contact is "football".

When the user equipment 100 obtains the measurement data of the contact, the user equipment 100 may determine a feature corresponding to the measurement data of the contact. For example, if the user equipment 100 obtains that a location of the contact obtained through measurement by a GPS sensor of the contact is "a shopping mall", the user equipment 100 may determine that a behavior state of the contact is "going shopping" and that a geographical environment in which the contact is located is "a city". In other words, features of the contact are "going shopping" and "a city". For another example, if the user equipment 100 obtains that a location of the contact obtained through measurement by a GPS sensor of the contact is "the seaside", the user equipment 100 may determine that a geographical environment in which the contact is located is "the seaside". In other words, a feature of the contact is "the seaside". For still another example, if the user equipment 100 obtains that heart rate information in a heart rate sensor of the contact meets a heart beat feature existing during sleeping, the user equipment 100 may determine that a behavior state of the contact is "in sleep". In other words, a feature of the contact is "in sleep". In addition, the user equipment 100 may further determine personal information of the contact according to the measurement data of the contact. For example, if the user equipment 100 obtains, through measurement by a GPS sensor of the contact, that a frequency at which the contact appears in a football pitch exceeds a preset threshold, the user equipment 100 may determine that an interest or a hobby of the contact is "football". If the user equipment 100 obtains, through measurement by a GPS sensor of the contact, that a frequency at which the contact is located in one address during work time exceeds a preset threshold, the user equipment 100 may determine that the address is a work address of the contact, and may further determine a work unit of the contact according to the work address.

When the user equipment 100 obtains the social text information of the contact and the measurement data of the contact, the user equipment 100 may determine a keyword of the social text information of the contact and a feature corresponding to the keyword. In addition, the user equipment 100 may further determine a feature corresponding to the measurement data of the contact. The user equipment 100 determines a feature of the contact according to the feature corresponding to the keyword and the feature corresponding to the measurement data of the contact.

Optionally, in an embodiment, the user equipment 100 may determine that the feature of the contact includes the feature corresponding to the keyword and the feature corresponding to the measurement data of the contact. For example, the user equipment 100 may determine, according to the social text information of the contact, that a feature of the contact is "football" and that a company in which the contact works is "Huawei Company". In addition, the user equipment 100 may determine, according to GPS data in the measurement data of the contact, that a geographical environment in which the contact is located is "a mountain area". In this case, the user equipment 100 may determine that features of the contact include "football", "Huawei Company", and "a mountain area".

Optionally, in another embodiment, the user equipment 100 may further determine, according to a preset priority, the feature of the contact from the feature corresponding to the keyword of the contact or the feature corresponding to the measurement data of the contact. For example, the preset priority may be that a priority of the feature corresponding to the keyword is higher than a priority of the feature corresponding to the measurement data of the contact. In this case, if the user equipment 100 determines, according to the social text information of the contact, that a geographical environment in which the contact is located is "a mountain area", but determines, according to the measurement data of the contact, that a geographical environment in which the contact is located is "the seaside", the user equipment 100 determines that the feature of the contact is "a mountain area". Alternatively, if the user equipment 100 determines, according to the social text information of the contact, that a behavior state of the contact is "taking an airplane", but the user equipment 100 determines, according to the measurement data of the contact, that a geographical environment in which the contact is located is "a mountain area", the user equipment 100 may determine that a feature of the contact is "taking an airplane". It can be understood that the preset priority may be alternatively that a priority corresponding to the measurement data of the contact is higher than a priority corresponding to the keyword. For another example, the feature corresponding to the keyword may further have different priorities. For example, a priority of sending a WeChat message, an SMS message, or an e-mail to the user equipment 100 by the contact may be higher than a priority of posting a message on a social network by the contact. For example, if the user equipment 100 determines, according to the SMS message sent by the contact, that a feature of the contact is "taking an airplane", but the user equipment 100 determines, according to the microblog sent by the contact, that a feature of the contact is "a mountain area", the user equipment 100 may determine that a feature of the contact is "taking an airplane". Further, the priority may be further set by conforming to another rule. For example, the user equipment 100 may periodically obtain social text information of the contact and/or measurement data of the contact, and periodically determine a feature of the contact. In this case, the priority may be determined according to a time at which the user equipment 100 obtains, within a period, information that includes a feature. For example, if a period for the user equipment 100 to obtain the social text information of the contact and/or the measurement data of the contact is one hour, and the user equipment 100 obtains a microblog sent by the contact at 13:00, a feature of the contact determined according to the microblog is "taking an airplane". If the user equipment 100 receives, at 13:02, an SMS message sent by the contact, a feature of the contact determined according to the SMS message is "a mountain area". In this case, the user equipment 100 may determine that the feature of the contact is "a mountain area". For another example, the priority may be further determined according to a quantity of features determined by the user equipment 100. For example, if the user equipment 100 determines, according to GPS information in the measurement data of the contact, that a feature of the contact is "the seaside", determines, according to an SMS message sent by the contact, that a feature of the contact is "the seaside", and determines, according to a microblog sent by the contact, that a feature of the contact is "a mountain area", the user equipment 100 may determine that the feature of the contact is "the seaside".

The user equipment 100 may also obtain a feature of the contact by using the network device 200. In this case, the network device 200 may obtain social text information of the contact and/or measurement data of the contact, and determine the feature of the contact according to the obtained information or data. Then, the network device 200 sends the feature of the contact to the user equipment 100.

Specifically, when the network device 200 obtains the social text information of the contact, the network device 200 may analyze the social text information of the contact and determine a keyword of the social text information of the contact. Then, the network device 200 may determine, as the feature of the contact, a feature corresponding to the keyword, where a type of the feature of the contact may be at least one of the following types: a geographical environment in which the contact is located, a behavior state of the contact, or personal information of the contact.

For example, the network device 200 may determine that the social text information posted by the contact includes keywords such as "takeoff", "an airplane", and "a flight". In this case, the network device 200 may determine that a behavior state of the contact is "taking an airplane". In other words, the network device 200 determines that a feature of the contact is "taking an airplane". The network device 200 may further determine that job information in a resume of the contact includes "from 2013-09-01, working in Huawei Company". In this case, the network device 200 may determine that a work unit of the contact is "Huawei Company". In other words, the network device 200 determines that a feature of the contact is "Huawei Company". The network device 200 may further determine the feature of the contact by counting a frequency of posting messages about an aspect by the contact. For example, if a frequency of posting football-related messages by the contact exceeds a preset threshold, the network device 200 may determine that an interest or a hobby of the contact is "football". In other words, the network device 200 determines that the feature of the contact is "football".

When the network device 200 obtains the measurement data of the contact, the network device 200 may determine the feature corresponding to the measurement data of the contact. For example, if the network device 200 obtains that a location of the contact obtained through measurement by a GPS sensor of the contact is "a shopping mall", the network device 200 may determine that a behavior state of the contact is "going shopping" and that a geographical environment of the contact is "a city". In other words, features of the contact are "going shopping" and "a city". For another example, if the network device 200 obtains that a location of the contact obtained through measurement by a GPS sensor of the contact is "the seaside", the network device 200 may determine that a geographical environment in which the contact is located is "the seaside". In other words, a feature of the contact is "the seaside". For still another example, if the network device 200 obtains that heart rate information in a heart rate sensor of the contact meets a heart rate feature that is during sleeping, the network device 200 may determine that a behavior state of the contact is "in sleep". In other words, a feature of the contact is "in sleep". In addition, the network device 200 may further determine personal information of the contact according to the measurement data of the contact. For example, if the network device 200 obtains, through measurement by a GPS sensor of the contact, that a frequency at which the contact appears in a football pitch exceeds a preset threshold, the network device 200 may determine that an interest or a hobby of the contact is "football". If the network device 200 obtains, through measurement by a GPS sensor of the contact, that a frequency at which the contact is located in one address during work time exceeds a preset threshold, the network device 200 may determine that the address is a work address of the contact, and may further determine a work unit of the contact according to the work address.

When the network device 200 obtains the social text information of the contact and the measurement data of the contact, the network device 200 may determine a keyword of the social text information of the contact and a feature corresponding to the keyword. In addition, the network device 200 may further determine the feature corresponding to the measurement data of the contact. The network device 200 determines the feature of the contact according to the feature corresponding to the keyword and the feature corresponding to the measurement data of the contact.

Optionally, in an embodiment, the network device 200 may determine that the feature of the contact includes the feature corresponding to the keyword and the feature corresponding to the measurement data of the contact. For example, the network device 200 may determine, according to the social text information of the contact, that a feature of the contact is "football" and that a company in which the contact works is "Huawei Company". In addition, the network device 200 may determine, according to GPS data in the measurement data of the contact, that a geographical environment in which the contact is located is "a mountain area". In this case, the network device 200 may determine that features of the contact include "football", "Huawei Company", and "a mountain area".

Optionally, in another embodiment, the network device 200 may further determine, according to a preset priority, the feature of the contact from the feature corresponding to the keyword of the contact or the feature corresponding to the measurement data of the contact. For example, the preset priority may be that a priority of the feature corresponding to the keyword is higher than a priority of the feature corresponding to the measurement data of the contact. In this case, if the network device 200 determines, according to the social text information of the contact, that a geographical environment in which the contact is located is "a mountain area", but determines, according to the measurement data of the contact, that a geographical environment in which the contact is located is "the seaside", the network device 200 determines that the feature of the contact is "a mountain area". Alternatively, if the network device 200 determines, according to the social text information of the contact, that a behavior state of the contact is "taking an airplane", but the network device 200 determines, according to the measurement data of the contact, that a geographical environment in which the contact is located is "a mountain area", the network device 200 may determine that a feature of the contact is "taking an airplane". It can be understood that the preset priority may be alternatively that a priority corresponding to the measurement data of the contact is higher than a priority corresponding to the keyword. For another example, the feature corresponding to the keyword may further have different priorities. For example, a priority of sending a WeChat message, an SMS message, or an e-mail to the network device 200 by the contact may be higher than a priority of posting a message on a social network by the contact. For example, if the network device 200 determines, according to the SMS message sent by the contact, that a feature of the contact is "taking an airplane", but the network device 200 determines, according to a microblog sent by the contact, that a feature of the contact is "a mountain area", the network device 200 may determine that a feature of the contact is "taking an airplane". Further, the priority may be further set by conforming to another rule. For example, the network device 200 may periodically obtain social text information of the contact and/or measurement data of the contact, and periodically determine a feature of the contact. In this case, the priority may be determined according to a time at which the network device 200 obtains, within a period, information that includes a feature. For example, if a period for the network device 200 to obtain the social text information of the contact and/or the measurement data of the contact is one hour, and the network device 200 obtains a microblog sent by the contact at 13:00, a feature of the contact determined according to the microblog is "taking an airplane". If the network device 200 obtains, at 13:02, an SMS message sent by the contact, a feature of the contact determined according to the SMS message is "a mountain area". In this case, the network device 200 may determine that a feature of the contact is "a mountain area". For another example, the priority may be further determined according to a quantity of features determined by the network device 200. For example, if the network device 200 determines, according to GPS information in the measurement data of the contact, that a feature of the contact is "the seaside", determines, according to an SMS message sent by the contact, that a feature of the contact is "the seaside", and determines, according to a microblog sent by the contact, that a feature of the contact is "a mountain area", the network device 200 may determine that the feature of the contact is "the seaside".

It can be understood that the contact who uses the device 300 may set permissions on the social text information and the measurement data, so as to limit a user equipment that can obtain the social text information and the measurement data of the contact. For example, the contact may set that the user equipment 100 can obtain all social text information and all measurement data of the contact, or the contact may set that the user equipment 100 can obtain only partial social text information and partial measurement data of the contact. In this case, the user equipment 100 or the network device 200 obtains information about the contact according to the obtained permissions and determines the feature of the contact according to the obtained information. For example, if the contact who uses the device 300 does not grant permissions on the measurement data to the user equipment 100, the user equipment 100 or the network device 200 cannot obtain the measurement data of the contact, and cannot obtain determine the feature of the contact according to the measurement data of the contact.

The user equipment 100 may determine a feature icon corresponding to the feature of the contact.

Optionally, in an embodiment, when the user equipment 100 determines the feature of the contact, or when the network device 200 determines the feature of the contact, the user equipment 100 may determine, after obtaining the feature of the contact, the feature icon corresponding to the feature.

Optionally, in another embodiment, when the network device 200 determines the feature of the contact, the network device 200 may determine the feature icon corresponding to the feature of the contact and send the feature icon to the user equipment 100.

A correspondence between the feature icon and the feature may be prestored. For example, if a feature of the contact is "football", an icon corresponding to the feature may be a football icon. For another example, if a feature of the contact is "taking an airplane", an icon corresponding to the feature may be an airplane icon. For still another example, if a feature of the contact is a company, an icon corresponding to the feature may be a logo of the company.

Further, the feature icon may be a static picture, or may be an animation. For example, a feature icon corresponding to a behavior state of the contact may be an animation, and a feature icon corresponding to an interest or a hobby in personal information of the contact may be a picture.

Further, locations of feature icons corresponding to different features may be determined. For example, a feature icon corresponding to a behavior state of the contact may be located before a feature icon corresponding to personal information of the contact.

Further, a size of the feature icon may be determined according to an update time. For example, a feature icon newly determined for a feature is greater than a feature icon previously determined for the feature.

Further, after the feature icon is selected, historical information of the feature corresponding to the feature icon may be presented on a display screen. For example, if a feature icon of the contact is "football", a time at which and a way in which the contact once discussed "football" may be presented on the display screen. For example, the user equipment 100 may perform presentation in a form of a list on the display screen.

Further, a profile picture of the contact may be determined according to data about interaction between the user equipment 100 and the contact. The data about interaction may include call duration, a quantity of calls, a quantity of times of SMS message sending, a quantity of times of WeChat message sending, a quantity of times of giving a like on a social medium, or the like between the user equipment 100 and the contact.

Optionally, in an embodiment, the user equipment 100 may determine the profile picture of the contact according to the data about interaction with the contact. For example, the profile picture of the contact may become clearer as the data about interaction between the user equipment 100 and the contact increases. In other words, if the data about interaction between the user equipment 100 and the contact is larger, the profile picture of the contact is clearer. For another example, if the data about interaction between the contact and the user equipment 100 is relatively small, the profile picture of the contact may be a simple abstract profile picture. If the data about interaction between the contact and the user equipment 100 exceeds a specific threshold, content of the profile picture of the contact may become a little richer. If a frequency at which the contact contacts with user equipment 100 further increases, the content of the profile picture of the contact may further become richer.

Further, the profile picture of the contact is not restored to the original state with a decrease of the data about interaction.

In addition, a profile picture of a contact and a feature icon of the contact that are in an icon of the contact may be presented in diverse manners. For example, the profile picture of the contact and the feature icon of the contact may be arranged side by side, or the profile picture of the contact and the feature icon of the contact may be arranged in an overlapped way.

A person skilled in the art can understand that the contact screen may be an screen that is presented when a call from the contact is answered, or the contact screen may be a address book screen, or the contact screen may be an screen on which detailed information of the contact is displayed.

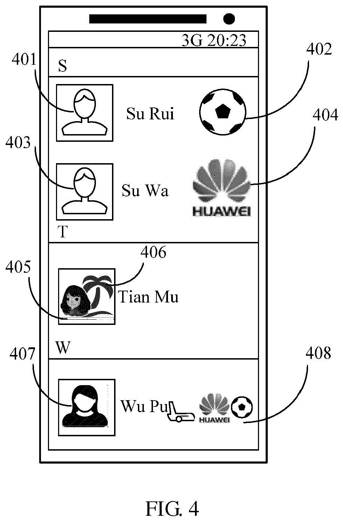

FIG. 4 is a schematic diagram of presenting a contact icon on a contact screen by user equipment according to an embodiment of the present disclosure. The contact screen shown in FIG. 4 is a address book screen. The contact screen shown in FIG. 4 includes four contacts. It can be seen that a contact icon corresponding to contact "Su Rui" includes a contact profile picture 401 and a football icon 402. In this case, it may indicate that a contact feature of contact "Su Rui" is "a football fan". A contact icon corresponding to contact "Su Wa" includes a contact profile picture 403 and a logo 404 of Huawei Company. In this case, it may indicate that a feature of contact "Su Wa" is an employee in Huawei Company. A contact icon corresponding to contact "Wu Pu" includes a contact icon 407 and a feature icon 408 of the contact. The feature icon 408 of the contact includes three icons: an airplane icon, a logo of Huawei Company, and a football icon. In this case, it may indicate that contact features corresponding to contact "Wu Pu" are "taking an airplane", "an employee in Huawei Company", and "a football fan". A contact icon corresponding to contact "Tian Mu" includes a contact profile picture 405 and an icon 406. The icon may be used to indicate that a geographical environment in which the contact is located is the seaside. In this case, it may indicate that a contact feature of contact "Tian Mu" is "the seaside". It can be seen, from the four contact icons, that contact profile pictures and contact feature icons may be arranged separately, or that contact profile pictures and contact feature icons may be arranged in an overlapped way. In addition, it can be seen that the profile picture 401, the profile picture 405, and the profile picture 407 have different levels of richness. The profile picture 401 is a simple profile picture and includes only a simple profile picture outline. The profile picture 407 is richer than the profile picture 401, and presents features such as hair and clothes. The profile picture 405 is richer than the profile picture 407, and presents facial features and a feature of gender. This implies that a user corresponding to the user equipment contacts with contact "Tian Mu" most frequently, contacts with contact "Wu Pu" relatively frequently, and contacts with contact "Su Wa" and contact "Su Rui" least frequently.

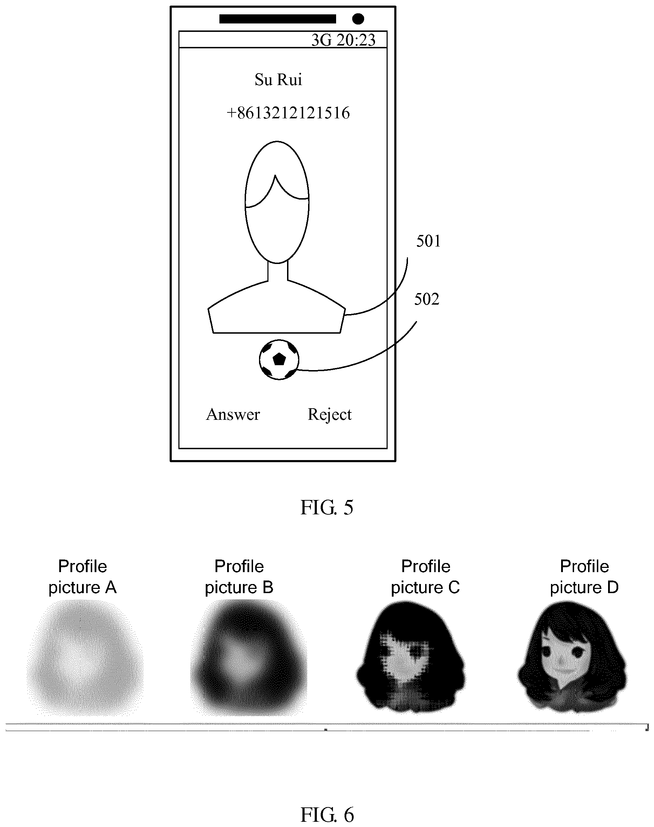

FIG. 5 is another schematic diagram of presenting a contact icon on a contact screen by user equipment according to an embodiment of the present disclosure. The contact screen shown in FIG. 5 is an incoming-call screen for a contact. A contact icon on the contact screen shown in FIG. 5 includes a contact profile picture 501 and a contact feature icon 502. In this case, it may indicate that a feature of contact "Su Rui" is "a football fan".

Certainly, a contact profile picture and a contact frequency may be further represented in another way than an ascending order of complexity of the contact profile pictures shown in FIG. 4. FIG. 6 is another schematic diagram of representing, by using a contact profile picture, a frequency of contacting with a contact.

Four images shown in FIG. 6 are schematic diagrams of four contact profile pictures. The four images are profile picture A, profile picture B, profile picture C, and profile picture D in sequence from left to right. After user equipment adds a contact to a address book, a contact profile picture of the contact may be an ambiguous profile picture shown by profile picture A. The user equipment may count a frequency of contacting with the contact. For example, the user equipment may periodically count a frequency of contacting with the contact. Alternatively, the user equipment may calculate accumulative frequencies of contacting with the contact. With an increasing frequency at which the user equipment contacts with the contact, the profile picture of the contact may become increasingly clear. Specifically, when a frequency at which the user equipment contacts with the contact exceeds a first preset value, the profile picture of the contact becomes profile picture B. When a frequency at which the user equipment contacts with the contact exceeds a second preset value, the profile picture of the contact becomes profile picture C. When a frequency at which the user equipment contacts with the contact exceeds a third preset value, the profile picture of the contact becomes profile picture D. It can be understood that the third preset value is greater than the second preset value, and the second preset value is greater than the first preset value.

It can be understood that FIG. 3 to FIG. 6 are only for helping a person skilled in the art better understand the present disclosure, instead of limiting the present disclosure.

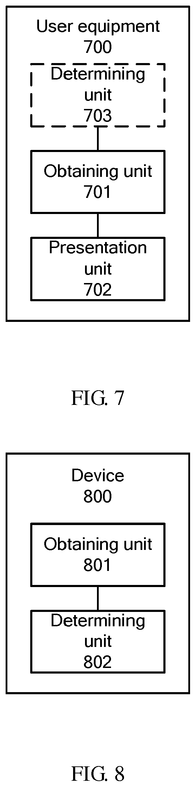

FIG. 7 is a structural block diagram of user equipment 700 according to an embodiment of the present disclosure. The user equipment shown in FIG. 7 may perform each step of the method shown in FIG. 1. As shown in FIG. 7, the user equipment 700 includes an obtaining unit 701 and a presentation unit 702.

The obtaining unit 701 is configured to obtain an icon of a contact, where the icon of the contact includes an identifier of the contact and a feature icon of the contact, the feature icon of the contact is determined according to feature information of the contact, the feature information of the contact includes at least one of social text information of the contact or measurement data of the contact, and the identifier of the contact includes at least one of a profile picture of the contact or a name of the contact.

The presentation unit 702 is configured to: present a contact screen, and present, on the contact screen, the icon of the contact obtained by the obtaining unit 701.

When the user equipment 700 shown in FIG. 7 presents the contact screen, the icon of the contact presented on the contact screen can reflect a feature of the contact. In other words, content besides basic communication information of the contact can be presented on the contact screen. In this way, richer content may be presented on the contact screen, and a user may know, by using the icon of the contact, of the feature corresponding to the contact.

Optionally, in an embodiment, the obtaining unit 701 is specifically configured to: obtain the icon of the contact, where the icon of the contact includes the identifier of the contact and the feature icon of the contact, and the feature icon of the contact is determined according to the feature information of the contact; determine a keyword of the social text information of the contact, where the social text information of the contact includes at least one of the following: information posted on a social network by the contact or information sent to the user equipment by the contact; and determine the feature information of the contact according to a feature corresponding to the keyword, where a type of the feature of the contact belongs to at least one of the following types: a geographical environment in which the contact is located, a behavior state of the contact, or personal information of the contact.

Optionally, in another embodiment, the obtaining unit 701 is specifically configured to: obtain the icon of the contact, where the icon of the contact includes the identifier of the contact and the feature icon of the contact, and the feature icon of the contact is determined according to the feature information of the contact; and determine, as a feature of the contact, a feature corresponding to the measurement data of the contact, and determine the feature information of the contact according to the feature, where a type of the feature of the contact belongs to at least one of the following types: a geographical environment in which the contact is located, a behavior state of the contact, or personal information of the contact.

Optionally, in another embodiment, the obtaining unit 701 is specifically configured to: obtain the icon of the contact, where the icon of the contact includes the identifier of the contact and the feature icon of the contact, the feature icon of the contact is determined according to the feature information of the contact, and the feature information of the contact includes at least one of the social text information of the contact or the measurement data of the contact; determine a keyword of the social text information of the contact, where the social text information of the contact includes at least one of the following: information posted on a social network by the contact or information sent to the user equipment by the contact; determine a feature corresponding to the keyword; determine a feature corresponding to the measurement data of the contact; and determine the feature information of the contact according to the feature corresponding to the keyword and the feature corresponding to the measurement data of the contact, where a type of the feature of the contact belongs to at least one of the following types: a geographical environment in which the contact is located, a behavior state of the contact, or personal information of the contact.

Optionally, in an embodiment, the obtaining unit 701 is specifically configured to: obtain the icon of the contact, where the icon of the contact includes the identifier of the contact and the feature icon of the contact, the feature icon of the contact is determined according to the feature information of the contact, and the feature information of the contact includes at least one of the social text information of the contact or the measurement data of the contact; and determine, according to a preset priority, the feature of the contact from the feature corresponding to the keyword of the contact or the feature corresponding to the measurement data of the contact.

Further, the identifier of the contact includes the profile picture of the contact, and the obtaining unit 701 is further configured to determine the profile picture of the contact according to data about interaction between the user equipment and the contact.

Optionally, in an embodiment, the user equipment 700 may further include a determining unit 703. The determining unit 703 may be configured to determine the feature of the contact according to the feature information of the contact. The determining unit 703 may be further configured to determine the feature icon of the contact according to the feature of the contact.

FIG. 8 is a structural block diagram of a device according to an embodiment of the present disclosure. The device 800 shown in FIG. 8 may perform each step shown in FIG. 2. As shown in FIG. 8, the device 800 includes an obtaining unit 801 and a determining unit 802.

The obtaining unit 801 is configured to obtain feature information of a contact, where the feature information of the contact includes at least one of social text information of the contact or measurement data of the contact.

The determining unit 802 is configured to determine a feature of the contact according to the feature information of the contact, so that user equipment presents, on a contact screen, a feature icon corresponding to the feature of the contact.

The device 800 shown in FIG. 8 may be a network device (for example, a server), or may be the user equipment. When the device 800 is a network device, optionally, in an embodiment, the device 800 may further include a sending unit, configured to send the determined feature of the contact to the user equipment. The user equipment may determine the corresponding feature icon according to the feature of the contact, and present, on the contact screen, the icon of the contact, where the icon of the contact includes an identifier of the contact and the feature icon of the contact. When the device 800 is a network device, optionally, in another embodiment, the determining unit 802 may further determine the feature icon of the contact according to the feature of the contact. The device 800 may further include a sending unit, where the sending unit is configured to send, to the user equipment, the feature icon of the contact determined by the determining unit 802. When the device 800 is the user equipment, after determining the feature of the contact, the user equipment may further determine the feature icon of the contact according to the feature of the contact and present, on the contact screen, the icon of the contact.

Optionally, in an embodiment, the determining unit 802 is specifically configured to: determine a keyword of the social text information of the contact, and determine the feature of the contact according to a feature corresponding to the keyword, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Optionally, in another embodiment, the determining unit 802 is specifically configured to determine, as the feature of the contact, a feature corresponding to the measurement data of the contact, where a type of the feature of the contact belongs to at least one of the following types: a geographical environment in which the contact is located, a behavior state of the contact, or personal information of the contact.

Optionally, in another embodiment, the determining unit 802 is specifically configured to: determine a keyword corresponding to the social text information of the contact, determine, according to a feature corresponding to the keyword, a feature corresponding to the measurement data of the contact, and determine the feature of the contact according to the feature corresponding to the keyword and the feature corresponding to the measurement data of the contact, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Further, the determining unit 802 is specifically configured to determine, according to a preset priority, the feature of the contact from the feature corresponding to the keyword of the contact or the feature corresponding to the measurement data of the contact.

Optionally, in an embodiment, the obtaining unit 801 is further configured to obtain data about interaction between the user equipment and the contact. The determining unit 802 is further configured to determine a profile picture of the contact according to the data about interaction between the user equipment and the contact.

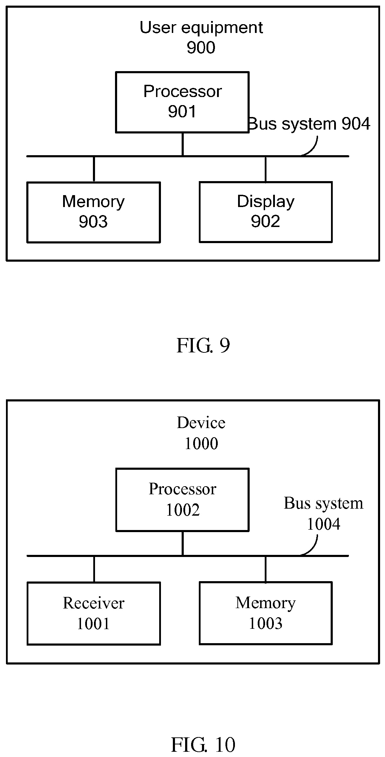

FIG. 9 is a structural block diagram of user equipment according to an embodiment of the present disclosure. The user equipment shown in FIG. 9 may perform each step of the method shown in FIG. 1. As shown in FIG. 9, the user equipment 900 includes a processor 901, a display 902, and a memory 903.

Components of the user equipment 900 are coupled together by using a bus system 904. In addition to a data bus, the bus system 904 further includes a power bus, a control bus, and a status signal bus. However, for clear description, various buses in FIG. 9 are marked as the bus system 904.

The method disclosed in the foregoing embodiment of the present disclosure may be applied to the processor 901, or may be implemented by the processor 901. The processor 901 may be an integrated circuit chip and has a signal processing capability. In an implementation process, each step of the foregoing method may be completed by using an integrated logic circuit of hardware in the processor 901 or by using an instruction in a software form. The processor 901 may be a general purpose processor, a digital signal processor (Digital Signal Processor, DSP), an application-specific integrated circuit (ASIC), a field programmable gate array (Field Programmable Gate Array, FPGA) or another programmable logical device, a discrete gate or transistor logical device, or a discrete hardware component, and can implement or execute the method, steps, and logic block diagrams disclosed in the foregoing embodiment of the present disclosure. The general purpose processor may be a microprocessor, or the processor may be any conventional processor or the like. The steps of the method that is disclosed with reference to the foregoing embodiment of the present disclosure may be executed and completed by a hardware decoding processor, or may be executed and completed by using a combination of hardware and software modules in a decoding processor. The software module may be located in a storage medium that is mature in the prior art, such as a random access memory (Random Access Memory, RAM), a flash memory, a read-only memory (Read-Only Memory, ROM), a programmable read-only memory, an electrically erasable programmable memory, or a register. The storage medium is located in the memory 903. The processor 901 reads an instruction in the memory 903 and completes the steps of the foregoing method with reference to hardware of the processor 901.

The processor 901 is configured to obtain an icon of a contact, where the icon of the contact includes an identifier of the contact and a feature icon of the contact, the feature icon of the contact is determined according to feature information of the contact, the feature information of the contact includes at least one of social text information of the contact or measurement data of the contact, and the identifier of the contact includes at least one of a profile picture of the contact or a name of the contact.

The display 902 is configured to: present a contact screen, and presents, on the contact screen, the icon of the contact obtained by the processor 901.

When the user equipment 900 shown in FIG. 9 presents the contact screen, the icon of the contact presented on the contact screen can reflect a feature of the contact. In other words, content besides basic communication information of the contact can be presented on the contact screen. In this way, richer content may be presented on the contact screen, and a user may know, by using the icon of the contact, of the feature corresponding to the contact.

Optionally, in an embodiment, the processor 901 is specifically configured to: obtain the icon of the contact, where the icon of the contact includes the identifier of the contact and the feature icon of the contact, and the feature icon of the contact is determined according to the feature information of the contact; determine a keyword of the social text information of the contact, where the social text information of the contact includes at least one of the following: information posted on a social network by the contact or information sent to the user equipment by the contact; and determine the feature information of the contact according to a feature corresponding to the keyword, where a type of the feature of the contact belongs to at least one of the following types: a geographical environment in which the contact is located, a behavior state of the contact, or personal information of the contact.

Optionally, in another embodiment, the processor 901 is specifically configured to: obtain the icon of the contact, where the icon of the contact includes the identifier of the contact and the feature icon of the contact, and the feature icon of the contact is determined according to the feature information of the contact; and determine, as a feature of the contact, a feature corresponding to the measurement data of the contact, and determine the feature information of the contact according to the feature, where a type of the feature of the contact belongs to at least one of the following types: a geographical environment in which the contact is located, a behavior state of the contact, or personal information of the contact.

Optionally, in another embodiment, the processor 901 is specifically configured to: obtain the icon of the contact, where the icon of the contact includes the identifier of the contact and the feature icon of the contact, the feature icon of the contact is determined according to the feature information of the contact, and the feature information of the contact includes at least one of the social text information of the contact or the measurement data of the contact; determine a keyword of the social text information of the contact, where the social text information of the contact includes at least one of the following: information posted on a social network by the contact or information sent to the user equipment by the contact; determine a feature corresponding to the keyword; determine a feature corresponding to the measurement data of the contact; and determine the feature information of the contact according to the feature corresponding to the keyword and the feature corresponding to the measurement data of the contact, where a type of the feature of the contact belongs to at least one of the following types: a geographical environment in which the contact is located, a behavior state of the contact, or personal information of the contact.

Optionally, in an embodiment, the processor 901 is specifically configured to: obtain the icon of the contact, where the icon of the contact includes the identifier of the contact and the feature icon of the contact, the feature icon of the contact is determined according to the feature information of the contact, and the feature information of the contact includes at least one of the social text information of the contact or the measurement data of the contact; and determine, according to a preset priority, the feature of the contact from the feature corresponding to the keyword of the contact or the feature corresponding to the measurement data of the contact.

Further, the identifier of the contact includes the profile picture of the contact, and the processor 901 is further configured to determine the profile picture of the contact according to data about interaction between the user equipment and the contact.

Optionally, in an embodiment, the processor 901 may be further configured to determine the feature of the contact according to the feature information of the contact. The processor 901 may be further configured to determine the feature icon of the contact according to the feature of the contact.

FIG. 10 is a structural block diagram of a device according to an embodiment of the present disclosure. The device 1000 shown in FIG. 10 may perform each step shown in FIG. 2. As shown in FIG. 10, the device 1000 includes a receiver 1001, a processor 1002, and a memory 1003.

Components of the device 1000 are coupled together by using a bus system 1004. In addition to a data bus, the bus system 1004 further includes a power bus, a control bus, and a status signal bus. However, for clear description, various buses in FIG. 10 are marked as the bus system 1004.

The method disclosed in the foregoing embodiment of the present disclosure may be applied to the processor 1002, or may be implemented by the processor 1002. The processor 1002 may be an integrated circuit chip and has a signal processing capability. In an implementation process, each step of the foregoing method may be completed by using an integrated logic circuit of hardware in the processor 1002 or by using an instruction in a software form. The processor 1002 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logical device, or a discrete hardware component, and can implement or execute the method, steps, and logic block diagrams disclosed in the foregoing embodiment of the present disclosure. The general purpose processor may be a microprocessor, or the processor may be any conventional processor or the like. The steps of the method that is disclosed with reference to the foregoing embodiment of the present disclosure may be executed and completed by a hardware decoding processor, or may be executed and completed by using a combination of hardware and software modules in a decoding processor. The software module may be located in a storage medium that is mature in the prior art, such as a random access memory (Random Access Memory, RAM), a flash memory, a read-only memory (Read-Only Memory, ROM), a programmable read-only memory, an electrically erasable programmable memory, or a register. The storage medium is located in the memory 1003. The processor 1002 reads an instruction in the memory 1003 and completes the steps of the foregoing method with reference to hardware of the processor 901.

The receiver 1001 is configured to obtain feature information of a contact, where the feature information of the contact includes at least one of social text information of the contact or measurement data of the contact.

The processor 1002 is configured to determine a feature of the contact according to the feature information of the contact, so that user equipment presents, on a contact screen, a feature icon corresponding to the feature of the contact.

The device 1000 shown in FIG. 10 may be a network device (for example, a server), or may be the user equipment. When the device 1000 is a network device, optionally, in an embodiment, the device 1000 may further include a sending unit, configured to send the determined feature of the contact to the user equipment. The user equipment may determine the corresponding feature icon according to the feature of the contact, and present, on the contact screen, the icon of the contact, where the icon of the contact includes an identifier of the contact and the feature icon of the contact. When the device 1000 is a network device, optionally, in another embodiment, the processor 1002 may further determine the feature icon of the contact according to the feature of the contact. The network device 1000 may further include a sender, where the sender is configured to send, to the user equipment, the feature icon of the contact determined by the processor 1002. When the device 1000 is the user equipment, after determining the feature of the contact, the user equipment may further determine the feature icon of the contact according to the feature of the contact and present, on the contact screen, the icon of the contact.

Optionally, in an embodiment, the processor 1002 is specifically configured to: determine a keyword of the social text information of the contact, and determine the feature of the contact according to a feature corresponding to the keyword, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Optionally, in another embodiment, the processor 1002 is specifically configured to determine, as the feature of the contact, a feature corresponding to the measurement data of the contact, where a type of the feature of the contact belongs to at least one of the following types: a geographical environment in which the contact is located, a behavior state of the contact, or personal information of the contact.

Optionally, in another embodiment, the processor 1002 is specifically configured to: determine a keyword corresponding to the social text information of the contact, determine, according to a feature corresponding to the keyword, a feature corresponding to the measurement data of the contact, and determine the feature of the contact according to the feature corresponding to the keyword and the feature corresponding to the measurement data of the contact, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Further, the processor 1002 is specifically configured to determine, according to a preset priority, the feature of the contact from the feature corresponding to the keyword of the contact or the feature corresponding to the measurement data of the contact.

Optionally, in an embodiment, the receiver 1001 is further configured to obtain data about interaction between the user equipment and the contact. The processor 1002 is further configured to determine a profile picture of the contact according to the data about interaction between the user equipment and the contact.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a specific working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is only exemplary. For example, the unit division is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some screens. The indirect couplings or communication connections between the apparatuses or units may be implemented in electronic, mechanical, or other forms.

The units described as separate parts may or may not be physically separate, and parts displayed as units may or may not be physical units, may be located at one place, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present disclosure. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. memory, an electrically erasable programmable memory, or a register. The storage medium is located in the memory 1003. The processor 1002 reads an instruction in the memory 1003 and completes the steps of the foregoing method with reference to hardware of the processor 901.

The receiver 1001 is configured to obtain feature information of a contact, where the feature information of the contact includes at least one of social text information of the contact or measurement data of the contact.

The processor 1002 is configured to determine a feature of the contact according to the feature information of the contact, so that user equipment presents, on a contact screen, a feature icon corresponding to the feature of the contact.

The device 1000 shown in FIG. 10 may be a network device (for example, a server), or may be the user equipment. When the device 1000 is a network device, optionally, in an embodiment, the device 1000 may further include a sending unit, configured to send the determined feature of the contact to the user equipment. The user equipment may determine the corresponding feature icon according to the feature of the contact, and present, on the contact screen, the icon of the contact, where the icon of the contact includes an identifier of the contact and the feature icon of the contact. When the device 1000 is a network device, optionally, in another embodiment, the processor 1002 may further determine the feature icon of the contact according to the feature of the contact. The network device 1000 may further include a sender, where the sender is configured to send, to the user equipment, the feature icon of the contact determined by the processor 1002. When the device 1000 is the user equipment, after determining the feature of the contact, the user equipment may further determine the feature icon of the contact according to the feature of the contact and present, on the contact screen, the icon of the contact.

Optionally, in an embodiment, the processor 1002 is specifically configured to: determine a keyword of the social text information of the contact, and determine the feature of the contact according to a feature corresponding to the keyword, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Optionally, in another embodiment, the processor 1002 is specifically configured to determine, as the feature of the contact, a feature corresponding to the measurement data of the contact, where a type of the feature of the contact belongs to at least one of the following types: a geographical environment in which the contact is located, a behavior state of the contact, or personal information of the contact.

Optionally, in another embodiment, the processor 1002 is specifically configured to: determine a keyword corresponding to the social text information of the contact, determine, according to a feature corresponding to the keyword, a feature corresponding to the measurement data of the contact, and determine the feature of the contact according to the feature corresponding to the keyword and the feature corresponding to the measurement data of the contact, where the social text information of the contact includes at least one of the following: information posted on a social network by the contact or information sent to the user equipment by the contact, and a type of the feature of the contact belongs to at least one of the following types: a geographical environment in which the contact is located, a behavior state of the contact, or personal information of the contact.

Further, the processor 1002 is specifically configured to determine, according to a preset priority, the feature of the contact from the feature corresponding to the keyword of the contact or the feature corresponding to the measurement data of the contact.

Optionally, in an embodiment, the receiver 1001 is further configured to obtain data about interaction between the user equipment and the contact. The processor 1002 is further configured to determine a profile picture of the contact according to the data about interaction between the user equipment and the contact.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclose.

It may be clearly understood by a person skilled in the art that, for the purpose of convenient and brief description, for a specific working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is only exemplary. For example, the unit division is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some screens. The indirect couplings or communication connections between the apparatuses or units may be implemented in electronic, mechanical, or other forms.

The units described as separate parts may or may not be physically separate, and parts displayed as units may or may not be physical units, may be located at one place, or may be distributed on a plurality of network units. Some or all of the units may be selected according to actual needs to achieve the objectives of the solutions of the embodiments.

In addition, functional units in the embodiments of the present disclose may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present disclose essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present disclose. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A contact information presentation method, performed by a user equipment (700), wherein the method comprises:
obtaining (101) an icon of a contact, wherein the icon of the contact comprises an identifier (401, 403, 405, 407) of the contact and a feature icon (402, 404, 406, 408) of the contact, the feature icon of the contact is determined according to feature information of the contact by the user equipment, the feature information of the contact comprises at least one of social text information of the contact or measurement data of the contact, wherein the measurement data of the contact comprise information about the contact obtained through measurement by the contact, and the identifier of the contact comprises at least one of a profile picture of the contact or a name of the contact; and wherein for obtaining (101) the icon of the contact, if the feature icon of the contact is determined by the user equipment, the method further comprises:
determining the feature information of the contact, wherein the determining the feature information of the contact comprises:
obtaining a keyword of the social text information of the contact, wherein the social text information of the contact comprises at least one of the following: information posted on a social network by the contact or information sent to a user equipment by the contact;
determining a feature corresponding to the keyword;
determining a feature corresponding to the measurement data of the contact; and
determining, according to a preset priority, the feature information of the contact from the feature corresponding to the keyword of the contact or the feature corresponding to the measurement data of the contact, wherein a type of the feature information of the contact belongs to at least one of the following types: a geographical environment in which the contact is located, a behavior state of the contact, or personal information of the contact; and presenting (102) the icon of the contact on a contact screen.

2. A contact information determining method, performed by a network device (800), wherein the method comprises:
obtaining (201) feature information of a contact, wherein the feature information of the contact comprises at least one of social text information of the contact or measurement data of the contact, wherein the measurement data of the contact comprise information about the contact obtained through measurement by the contact; and
determining a keyword of the social text information of the contact, wherein the social text information of the contact comprises at least one of the following: information posted on a social network by the contact or information sent to a user equipment by the contact;
determining a feature corresponding to the keyword;
determining a feature corresponding to the measurement data of the contact; and
determining, according to a preset priority, the feature information of the contact from the feature corresponding to the keyword of the contact or the feature corresponding to the measurement data of the contact, wherein a type of the feature information of the contact belongs to at least one of the following types: a geographical environment in which the contact is located, a behavior state of the contact, or personal information of the contact;
determining a feature icon of the contact according to the feature information of the contact, so that user equipment presents, on a contact screen, a feature icon corresponding to the feature of the contact; and
sending the determined feature information of the contact or the determined feature icon of the contact to a user equipment.

3. User equipment (700), wherein the user equipment (700) comprises:
an obtaining unit (701), configured to,
obtain an icon of a contact, wherein the icon of the contact comprises an identifier of the contact and a feature icon of the contact, the feature icon of the contact is determined according to feature information of the contact by the user equipment, the feature information of the contact comprises at least one of social text information of the contact or measurement data of the contact, wherein the measurement data of the contact comprise information about the contact obtained through measurement by the contact, and the identifier of the contact comprises at least one of a profile picture of the contact or a name of the contact;
wherein the obtaining unit (701) is further configured to:
determine a keyword of the social text information of the contact, wherein the social text information of the contact comprises at least one of the following: information posted on a social network by the contact or information sent to the user equipment by the contact;
determine a feature corresponding to the keyword;
determine a feature corresponding to the measurement data of the contact; and
determine, according to a preset priority, the feature information of the contact from the feature corresponding to the keyword of the contact or the feature corresponding to the measurement data of the contact, wherein a type of the feature information of the contact belongs to at least one of the following types: a geographical environment in which the contact is located, a behavior state of the contact, or personal information of the contact; and
a presentation unit (702), configured to: present a contact screen, and present, on the contact screen, the icon of the contact.

4. A network device (800), wherein the network device (800) comprises:
an obtaining unit (801), configured to obtain feature information of a contact, wherein the feature information of the contact comprises at least one of social text information of the contact or measurement data of the contact, wherein the measurement data of the contact comprise information about the contact obtained through measurement by the contact; and
a determining unit (802), configured to,
determine a keyword of the social text information of the contact, wherein the social text information of the contact comprises at least one of the following: information posted on a social network by the contact or information sent to a user equipment by the contact;
determine a feature corresponding to the keyword;
determine a feature corresponding to the measurement data of the contact; and
determine, according to a preset priority, the feature information of the contact from the feature corresponding to the keyword of the contact or the feature corresponding to the measurement data of the contact, wherein a type of the feature information of the contact belongs to at least one of the following types: a geographical environment in which the contact is located, a behavior state of the contact, or personal information of the contact;
determine a feature icon of the contact according to the feature information of the contact, so that user equipment presents, on a contact screen, a feature icon corresponding to the feature of the contact; and
a sending unit, configured to:
send the determined feature information of the contact or the determined feature icon of the contact to a user equipment.

## Patentansprüche

1. Verfahren zur Darstellung von Kontaktinformationen, durchgeführt durch ein Benutzer-Equipment (700), wobei das Verfahren umfasst:
Erhalten (101) eines Symbols eines Kontakts, wobei das Symbol des Kontakts eine Kennung (401, 403, 405, 407) des Kontakts umfasst, und eines Merkmalssymbols (402, 404, 406, 408) des Kontakts, wobei das Merkmalssymbol des Kontakts durch das Benutzer-Equipment entsprechend der Merkmalsinformation des Kontakts festgelegt wird, die Merkmalsinformation des Kontakts mindestens eines von sozialer Textinformation des Kontakts oder Messdaten des Kontakts umfasst, wobei die Messdaten des Kontakts Informationen zu dem Kontakt umfassen, die mittels Messung von dem Kontakt erhalten wurden, und die Kennung des Kontakts mindestens eines von einem Profilbild des Kontakts oder einem Namen des Kontakts umfasst; und wobei das Verfahren zum Erhalten (101) des Symbols des Kontakts, falls das Merkmalssymbol des Kontakts durch das Benutzer-Equipment festgelegt wird, ferner umfasst:
Bestimmen der Merkmalsinformationen des Kontakts, wobei das Bestimmen der Merkmalsinformationen des Kontakts umfasst:
Erhalten eines Schlüsselworts der sozialen Textinformation des Kontakts, wobei die soziale Textinformation des Kontakts mindestens eines der Folgenden umfasst: in einem sozialen Netzwerk von dem Kontakt gepostete Informationen oder von dem Kontakt zu einem Benutzer-Equipment gesendete Informationen;
Ermitteln eines dem Schlüsselwort entsprechenden Merkmals;
Ermitteln eines den Messdaten des Kontakts entsprechenden Merkmals; und
Bestimmen der Merkmalsinformation des Kontakts gemäß einer vorgegebenen Priorität aus dem Merkmal, das dem Schlüsselwort des Kontakts entspricht, oder aus dem Merkmal, das den Messdaten des Kontakts entspricht, wobei ein Typ der Merkmalsinformation des Kontakts zu mindestens einem der folgenden Typen gehört: einer geografischen Umgebung, in der sich der Kontakt befindet; einem Verhaltenszustand des Kontakts; oder persönlichen Informationen des Kontakts; und Darstellen (102) des Symbols des Kontakts auf einem Kontaktbildschirm.

2. Verfahren zur Bestimmung von Kontaktinformationen, durchgeführt durch eine Netzwerkeinrichtung (800), wobei das Verfahren umfasst:
Erhalten (201) von Merkmalsinformationen eines Kontakts, wobei die Merkmalsinformationen des Kontakts mindestens eines umfassen von sozialen Textinformationen des Kontakts oder Messdaten des Kontakts, wobei die Messdaten des Kontakts Informationen zu dem Kontakt umfassen, die mittels Messung von dem Kontakt erhalten wurden; und
Festlegen eines Schlüsselworts der sozialen Textinformationen des Kontakts, wobei die sozialen Textinformationen des Kontakts mindestens eines der Folgenden umfassen: in einem sozialen Netzwerk von dem Kontakt gepostete Informationen oder von dem Kontakt zu einem Benutzer-Equipment gesendete Informationen;
Ermitteln eines dem Schlüsselwort entsprechenden Merkmals;
Ermitteln eines den Messdaten des Kontakts entsprechenden Merkmals; und
Bestimmen der Merkmalsinformationen des Kontakts gemäß einer vorgegebenen Priorität aus dem Merkmal, das dem Schlüsselwort des Kontakts entspricht, oder aus dem Merkmal, das den Messdaten des Kontakts entspricht, wobei ein Typ der Merkmalsinformationen des Kontakts zu mindestens einem der folgenden Typen gehört: einer geografischen Umgebung, in der sich der Kontakt befindet; einem Verhaltenszustand des Kontakts; oder persönlichen Informationen des Kontakts;
Festlegen eines Merkmalssymbols des Kontakts entsprechend den Merkmalsinformationen des Kontakts, sodass das Benutzer-Equipment auf einem Kontaktbildschirm ein dem Merkmal des Kontakts entsprechendes Merkmalssymbol darstellt; und
Senden der festgelegten Merkmalsinformationen des Kontakts oder des festgelegten Merkmalssymbols des Kontakts zu einem Benutzer-Equipment.

3. Benutzer-Equipment (700), wobei das Benutzer-Equipment (700) umfasst:
eine Erhalteinheit (701), ausgelegt zum
Erhalten eines Symbols eines Kontakts, wobei das Symbol des Kontakts eine Kennung des Kontakts und ein Merkmalssymbol des Kontakts umfasst; das Merkmalssymbol des Kontakts entsprechend Merkmalsinformationen des Kontakts durch das Benutzer-Equipment bestimmt wird; die Merkmalsinformationen des Kontakts mindestens eines von sozialen Textinformationen des Kontakts oder Messdaten des Kontakts umfassen, wobei die Messdaten des Kontakts Informationen zu dem Kontakt umfassen, die mittels Messung von dem Kontakt erhalten wurden, und die Kennung des Kontakts mindestens eines von einem Profilbild des Kontakts oder einem Namen des Kontakts umfasst;
wobei die Erhalteinheit (701) ferner ausgelegt ist zum Ermitteln eines Schlüsselworts der sozialen Textinformationen des Kontakts, wobei die sozialen Textinformationen des Kontakts mindestens eines der Folgenden umfassen: in einem sozialen Netzwerk von dem Kontakt gepostete Informationen oder von dem Kontakt zu einem Benutzer-Equipment gesendete Informationen;
Ermitteln eines dem Schlüsselwort entsprechenden Merkmals;
Ermitteln eines den Messdaten des Kontakts entsprechenden Merkmals; und
Bestimmen der Merkmalsinformationen des Kontakts gemäß einer vorgegebenen Priorität aus dem Merkmal, das dem Schlüsselwort des Kontakts entspricht, oder aus dem Merkmal, das den Messdaten des Kontakts entspricht, wobei ein Typ der Merkmalsinformationen des Kontakts zu mindestens einem der folgenden Typen gehört: einer geografischen Umgebung, in der sich der Kontakt befindet; einem Verhaltenszustand des Kontakts; oder persönlichen Informationen des Kontakts; und eine Darstellungseinheit (702), ausgelegt zum Anzeigen eines Kontaktbildschirms und Darstellen des Symbols des Kontakts auf dem Kontaktbildschirm.

4. Netzwerkeinrichtung (800), wobei die Netzwerkeinrichtung (800) umfasst:
eine Erhalteinheit (801), ausgelegt zum Erhalten von Merkmalsinformationen eines Kontakts, wobei die Merkmalsinformationen des Kontakts mindestens eines umfassen von sozialen Textinformationen des Kontakts oder Messdaten des Kontakts, wobei die Messdaten des Kontakts Informationen zu dem Kontakt umfassen, die mittels Messung von dem Kontakt erhalten wurden; und
eine Bestimmungseinheit (802), ausgelegt zum
Festlegen eines Schlüsselworts der sozialen Textinformationen des Kontakts, wobei die sozialen Textinformationen des Kontakts mindestens eines der Folgenden umfassen: in einem sozialen Netzwerk von dem Kontakt gepostete Informationen oder von dem Kontakt zu einem Benutzer-Equipment gesendete Informationen;
Ermitteln eines dem Schlüsselwort entsprechenden Merkmals;
Ermitteln eines den Messdaten des Kontakts entsprechenden Merkmals; und
Bestimmen der Merkmalsinformationen des Kontakts gemäß einer vorgegebenen Priorität aus dem Merkmal, das dem Schlüsselwort des Kontakts entspricht, oder aus dem Merkmal, das den Messdaten des Kontakts entspricht, wobei ein Typ der Merkmalsinformationen des Kontakts zu mindestens einem der folgenden Typen gehört: einer geografischen Umgebung, in der sich der Kontakt befindet; einem Verhaltenszustand des Kontakts; oder persönlichen Informationen des Kontakts;
Festlegen eines Merkmalssymbols des Kontakts entsprechend den Merkmalsinformationen des Kontakts, sodass das Benutzer-Equipment auf einem Kontaktbildschirm ein dem Merkmal des Kontakts entsprechendes Merkmalssymbol darstellt; und
eine Sendeeinheit, ausgelegt zum
Senden der festgelegten Merkmalsinformationen des Kontakts oder des festgelegten Merkmalssymbols des Kontakts zu einem Benutzer-Equipment.

## Revendications

1. Procédé de présentation d'informations de contact, réalisé par un équipement d'utilisateur (700), le procédé comprenant les étapes consistant à :
obtenir (101) une icône d'un contact, l'icône du contact comprenant un identifiant (401, 403, 405, 407) du contact et une icône d'attribut (402, 404, 406, 408) du contact, l'icône d'attribut du contact étant déterminée selon une information d'attribut du contact par l'équipement d'utilisateur, l'information d'attribut du contact comprenant au moins une information parmi une information de texte social du contact ou des données de mesure du contact, les données de mesure du contact comprenant une information sur le contact obtenue par l'intermédiaire d'une mesure par le contact, et l'identifiant du contact comprenant une image de profil du contact et/ou un nom du contact ; et le procédé comprenant en outre, pour obtenir (101) l'icône du contact, si l'icône d'attribut du contact est déterminée par l'équipement d'utilisateur, l'étape consistant à :
déterminer l'information d'attribut du contact, la détermination de l'information d'attribut du contact comprenant les étapes consistant à :
obtenir un mot-clé de l'information de texte social du contact, l'information de texte social du contact comprenant au moins une des informations suivantes : une information publiée sur un réseau social par le contact et une information envoyée à un équipement d'utilisateur par le contact ;
déterminer un attribut correspondant au mot-clé ;
déterminer un attribut correspondant aux données de mesure du contact ; et
déterminer, selon une priorité prédéfinie, l'information d'attribut du contact à partir de l'attribut correspondant au mot-clé du contact ou de l'attribut correspondant aux données de mesure du contact, un type de l'information d'attribut du contact appartenant à au moins un des types suivants : un environnement géographique où se trouve le contact, un état de comportement du contact et une information personnelle du contact ; et
présenter (102) l'icône du contact sur un écran de contact.

2. Procédé de détermination d'informations de contact, réalisé par un dispositif de réseau (800), le procédé comprenant les étapes consistant à :
obtenir (201) une information d'attribut d'un contact, l'information d'attribut du contact comprenant au moins une information parmi une information de texte social du contact ou des données de mesure du contact, les données de mesure du contact comprenant une information sur le contact obtenue par l'intermédiaire d'une mesure par le contact ; et
déterminer un mot-clé de l'information de texte social du contact, l'information de texte social du contact comprenant au moins une des informations suivantes : une information publiée sur un réseau social par le contact et une information envoyée à un équipement d'utilisateur par le contact ;
déterminer un attribut correspondant au mot-clé ;
déterminer un attribut correspondant aux données de mesure du contact ; et
déterminer, selon une priorité prédéfinie, l'information d'attribut du contact à partir de l'attribut correspondant au mot-clé du contact ou de l'attribut correspondant aux données de mesure du contact, un type de l'information d'attribut du contact appartenant à au moins un des types suivants : un environnement géographique où se trouve le contact, un état de comportement du contact et une information personnelle du contact ;
déterminer une icône d'attribut du contact selon l'information d'attribut du contact, de sorte que l'équipement d'utilisateur présente, sur un écran de contact, une icône d'attribut correspondant à l'attribut du contact ; et
envoyer l'information d'attribut déterminée du contact ou l'icône d'attribut déterminée du contact à un équipement d'utilisateur.

3. Équipement d'utilisateur (700), l'équipement d'utilisateur (700) comprenant :
une unité d'obtention (701), configurée pour :
obtenir une icône d'un contact, l'icône du contact comprenant un identifiant du contact et une icône d'attribut du contact, l'icône d'attribut du contact étant déterminée selon une information d'attribut du contact par l'équipement d'utilisateur, l'information d'attribut du contact comprenant au moins une information parmi une information de texte social du contact ou des données de mesure du contact, les données de mesure du contact comprenant une information sur le contact obtenue par l'intermédiaire d'une mesure par le contact, et l'identifiant du contact comprenant une image de profil du contact et/ou un nom du contact ;
l'unité d'obtention (701) étant en outre configurée pour :
déterminer un mot-clé de l'information de texte social du contact, l'information de texte social du contact comprenant au moins une des informations suivantes : une information publiée sur un réseau social par le contact et une information envoyée à l'équipement d'utilisateur par le contact ;
déterminer un attribut correspondant au mot-clé ;
déterminer un attribut correspondant aux données de mesure du contact ; et
déterminer, selon une priorité prédéfinie, l'information d'attribut du contact à partir de l'attribut correspondant au mot-clé du contact ou de l'attribut correspondant aux données de mesure du contact, un type de l'information d'attribut du contact appartenant à au moins un des types suivants : un environnement géographique où se trouve le contact, un état de comportement du contact et une information personnelle du contact ; et
une unité de présentation (702), configurée pour : présenter un écran de contact et présenter, sur l'écran de contact, l'icône du contact.

4. Dispositif de réseau (800), le dispositif de réseau (800) comprenant :
une unité d'obtention (801), configurée pour obtenir une information d'attribut d'un contact, l'information d'attribut du contact comprenant au moins une information parmi une information de texte social du contact ou des données de mesure du contact, les données de mesure du contact comprenant une information sur le contact obtenue par l'intermédiaire d'une mesure par le contact ; et
une unité de détermination (802), configurée pour :
déterminer un mot-clé de l'information de texte social du contact, l'information de texte social du contact comprenant au moins une des informations suivantes : une information publiée sur un réseau social par le contact et une information envoyée à un équipement d'utilisateur par le contact ;
déterminer un attribut correspondant au mot-clé ;
déterminer un attribut correspondant aux données de mesure du contact ; et
déterminer, selon une priorité prédéfinie, l'information d'attribut du contact à partir de l'attribut correspondant au mot-clé du contact ou de l'attribut correspondant aux données de mesure du contact, un type de l'information d'attribut du contact appartenant à au moins un des types suivants : un environnement géographique où se trouve le contact, un état de comportement du contact et une information personnelle du contact ;
déterminer une icône d'attribut du contact selon l'information d'attribut du contact, de sorte que l'équipement d'utilisateur présente, sur un écran de contact, une icône d'attribut correspondant à l'attribut du contact ; et
une unité d'envoi, configurée pour :
envoyer l'information d'attribut déterminée du contact ou l'icône d'attribut déterminée du contact à un équipement d'utilisateur.
